**Europäisches Patentamt**

**European Patent Office**

**Office européen des brevets**

(19)

(11) Veröffentlichungsnummer: **0 266 453**
**B1**

(12) **EUROPÄISCHE PATENTSCHRIFT**

(45) Veröffentlichungstag der Patentschrift:
**02.11.89**

(51) Int. Cl.⁴: **A47J 43/07, A47J 43/10**

(21) Anmeldenummer: **86115472.2**

(22) Anmeldetag: **07.11.86**

(54) Rührbesen, insbesondere für Haushaltszwecke.

(43) Veröffentlichungstag der Anmeldung:
**11.05.88 Patentblatt 88/19**

(45) Bekanntmachung des Hinweises auf die Patenterteilung:
**02.11.89 Patentblatt 89/44**

(84) Benannte Vertragsstaaten:
**AT BE CH DE ES FR GB GR IT LI LU NL SE**

(56) Entgegenhaltungen:
**DE-B- 1 112 611**
**DE-C- 377 621**
**DE-C- 442 144**
**FR-A- 366 570**
**FR-A- 522 043**
**GB-A- 658 555**
**GB-A- 706 802**

(73) Patentinhaber: **Arthur Eugster Elektro-Haushaltgeräte,**
**Hofstrasse 28a, CH-8590 Romanshorn(CH)**

(72) Erfinder: **Anliker, Werner, Pfadacher 1,**
**CH-8623 Wetzikon(CH)**

(74) Vertreter: **Patentanwälte Grünecker, Kinkeldey,**
**Stockmair & Partner, Maximilianstrasse 58,**
**D-8000 München 22(DE)**

ACTORUM AG

## Beschreibung

Die Erfindung bezieht sich auf einen Rührbesen, insbesondere für Haushaltszwecke, bestehend aus einem Stiel und an einem Ende desselben angebrachten Schlagbügeln, die aus einer endlosen, in sich geschlossenen Drahtschraube bestehen, die den Stiel umschließt. Ein solcher Rührbesen ist aus der DE-B-442 144 bekannt.

Diese Druckschrift beschreibt einen Rührbesen in Form eines Quirls mit festen Schlagbügeln, die durch eine endlose, in sich geschlossene Drahtschraube gebildet werden, wobei die Schraube eine solche Form hat, daß sie den Quirlstiel federnd umschließt. Infolge der radialen Federung des von der Drahtschraube gebildeten Quirlkopfes läßt sich dieser bequem auf den Quirlstiel aufsetzen und ebenso bequem zum Zwecke der Reinigung wieder entfernen.

Dieser Rührbesen ist nur zur Verwendung in niedrig viskosen Flüssigkeiten geeignet, da ansonsten die Gefahr besteht, daß der Quirlkopf an dem Stiel durchrutscht und dessen Drehbewegung nicht mitmacht. Dieser Quirl ist daher als Schaumschläger gedacht, für das Rühren in höher viskosen Massen, insbesondere in breiigen, pastösen oder gar teigförmigen Massen ist er nicht geeignet.

Aus der FR-A-366 570 ist ein Küchengerät zum Schlagen von Eischnee bekannt, bei dem am Ende einer mittels eines Kurbeltriebes drehbaren Welle ein Teller drehfest angebracht ist, der mit einem Kranz von Löchern versehen ist, in die die einen Enden von Federdrahtbügeln eingehängt sind, deren andere Enden an einer Lochscheibe angelenkt sind, die auf einer auf der Welle axial verschiebbaren Buchse befestigt ist. Beim Drehen der Welle biegen sich die Federdrahtbügel unter der Wirkung der auf sie wirkenden Fliehkraft nach außen durch, wobei die Buchse sich in Richtung auf den vorgenannten Teller bewegt. Auch dieses Gerät ist nur zur Verwendung in Medien bestimmt, die aufgrund ihrer niedrigen Viskosität der Bewegung der Draht-bügel keinen wesentlichen Widerstand entgegen-setzen.

Die Bestrebungen bei Haushaltsmaschinen gehen dahin, motorgetriebene Maschinen zu schaffen, die möglichst netzunabhängig sein sollen. Bei batterie- oder akkumulatorbetriebenen Geräten ist der Vermeidung einer Überlastung besondere Aufmerksamkeit zu schenken, da sich sonst die Batterie bzw. der Akkumulator vorzeitig erschöpft. Bekanntlich steigt der von einem Elektromotor aufgenommene Strom wegen fehlender Gegen-EMK unverhältnismäßig an, wenn die Motorwelle von außen gebremst wird. Ein Rührbesen, der in einer der vorgenannten Arten ausgeführt wäre, würde eine unerwünschte Überlastung eines elektrischen Antriebsmotors hervorrufen, wenn man ihn in ein höher viskoses Medium eintauchen würde.

Der Erfindung liegt daher die Aufgabe zugrunde, einen Rührbesen der eingangs genannten Art anzugeben, der für die Verwendung mit einem netzunabhängig versorgten Antriebsgerät sowohl in niedrig viskosen als auch in hoch viskosen Medien in gleicher Weise geeignet ist, so daß keine Überlastung des Motors und eine dementsprechend übermäßige Stromaufnahme zu befürchten ist.

Diese Aufgabe wird durch die kennzeichnenden Merkmale des Anspruchs 1 gelöst. Vorteilhafte Ausgestaltungen der Erfindung sind Gegenstand der abhängigen Ansprüche.

Von der Erfindung wird ein Rührbesen angegeben, dessen wirksamer Kopf in Abhängigkeit von der Viskosität des Mediums, in das er eingetaucht wird, im Betrieb seine Gestalt ändert. Durch den sich bei höher viskosen Medien ergebenden größeren Widerstand an den Schlagbügeln verdrehen diese sich an den sie tragenden Scheiben, wodurch der wirksame Durchmesser des Kopfes verkleinert wird mit der Folge, daß das vom Antriebsmotor auf-zubringende Drehmoment sich entsprechend ver-ringert. Andererseits springen die Schlagbügel in ihre den größten Kopfdurchmesser erzeugende Stellung zurück, sobald das Medium entsprechend niedrigere Viskosität hat. Dieser Effekt ist aufgrund der Federwirkung der Drahtschraube unabhängig von der Drehzahl. Beim Rühren in einem Medium, dessen Viskosität sich während des Rührvorgangs ändert, braucht daher der Rührbesen nicht gewechselt zu werden.

Vorteilhafterweise sind die Bohrungen in den beiden Scheiben, durch die die Schlaufen der Drahtschraube geführt sind, in Umfangsrichtung gegeneinander versetzt, so daß sie dem natürlichen Verlauf der Drahtschlingen angepaßt sind und in der Ruhestellung der Drahtschraube keine diese ver-formenden Kräfte hervorrufen. Die Drahtschlau-fen können sich dann auch am freiesten in den Bohrungen drehen. Weiterhin ist es günstig, wenn die Bohrungskränze einander gleiche Durchmesser haben, weil dies die Fertigung beim Einfädeln der Drahtschraube in die Bohrungen erleichtert. Ebenso erleichtert eine kreisförmige Ausbildung der Schlaufen die Herstellung.

Für den Gebrauch des Rührbesens ist es weiterhin günstig, wenn dieser von einem Stützkopf umgeben ist, in welchem der Stiel drehbar gelagert ist, der in axialer Richtung gegenüber dem Stiel festgelegt ist und der sich in axialer Richtung über das Ende des von der Drahtschraube gebildeten Kopfes des Rührbesens hinauserstreckt. Dieser Stützkopf verhindert, daß die Drahtschraube im Gebrauch mit den Wänden des das zu rührende Medium aufnehmenden Gefäßes in Berührung gelangt und dadurch gebremst wird. Dieser Stützkopf trägt daher vorteilhaft zu einer Vermeidung einer Überlastung des Antriebsmotors des Rührbesens bei. Der Stützkopf kann frei drehbar sein, er kann aber auch mit einem hohlen, von dem Stiel durchdrungenen Schaft drehfest verbunden sein, der an seinem dem Stützkopf abgewandten Ende mit einer Einrichtung zum Befestigen am Gehäuse einer Antriebseinrichtung versehen ist und auf diese Weise vollkommen gegen Drehung gesichert ist.

Der Stützkopf sollte möglichst offen ausgeführt sein, damit der Rührbesen mit dem zu rührenden Medium ungestört in Berührung treten kann. Er weist vorzugsweise mehrere sich jeweils radial und axial erstreckende Schenkel auf, im günstigsten Falle drei solcher Schenkel, die jeweils zwischen sich einen offenen Zwischenraum ausbilden. Wenn die sich axial erstreckenden Abschnitte der Schenkel eine schraubenlinienförmig verlaufende Fläche aufweisen, dann können diese bei passender Drehrichtung des Rührbesens eine strömungsleitende Funktion übernehmen, die in dem zu rührenden Medium eine parallel zur Achse des Stiels verlaufende Bewegungskomponente hervorruft.

Die Erfindung wird nachfolgend unter Bezugnahme auf in den Zeichnungen dargestellte Ausführungsbeispiele näher erläutert. Es zeigt:

Fig. 1 einen Rührbesen nach der Erfindung mit einem an einem Schaft befestigten Stützkopf, und

Fig. 2 einen ähnlichen Rührbesen, bei dem jedoch der Stützkopf auf dem Stiel frei drehbar ist.

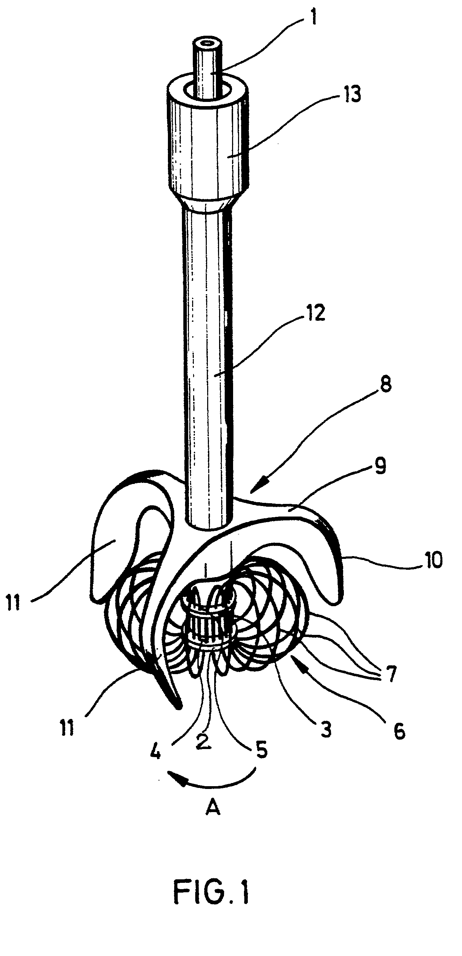

Man erkennt in Fig. 1 einen Stiel 1, dessen oberes Ende zum Antrieb durch eine Antriebseinrichtung, insbesondere motorgetriebener Art, vorgesehen ist. Am unteren Ende des Stieles 1 sind im Abstand parallel zueinander zwei Scheiben 2 und 3 drehfest angebracht. Beide Scheiben 2, 3 sind jeweils mit einem konzentrischen Kranz von Bohrungen 4 bzw. 5 versehen, die achsparallel verlaufen. Durch die Bohrungen 4 und 5 in den Ringen 2 und 3 ist eine insgesamt mit 6 bezeichnete Drahtschraube geführt, deren Schlaufen 7 im wesentlichen kreisförmig sind. Die Drahtschlaufen 7 sitzen lose in den Bohrungen 4 und 5, so daß die Drahtschlaufen aus ihrer im wesentlichen radial verlaufenden Erstreckung ausgelenkt werden können. Wie aus der Zeichnung ersichtlich ist, sind die Bohrungen 4 der unteren Scheibe 2 gegenüber den Bohrungen 5 der oberen Scheibe 3 geringfügig in Umfangsrichtung versetzt, entsprechend etwa dem Verlauf der Drahtschlaufen 7 durch die Bohrungen. Im dargestellten Beispiel haben die beiden Bohrungskränze gleiche Durchmesser, was, wie schon erwähnt, die Herstellung erleichtert.

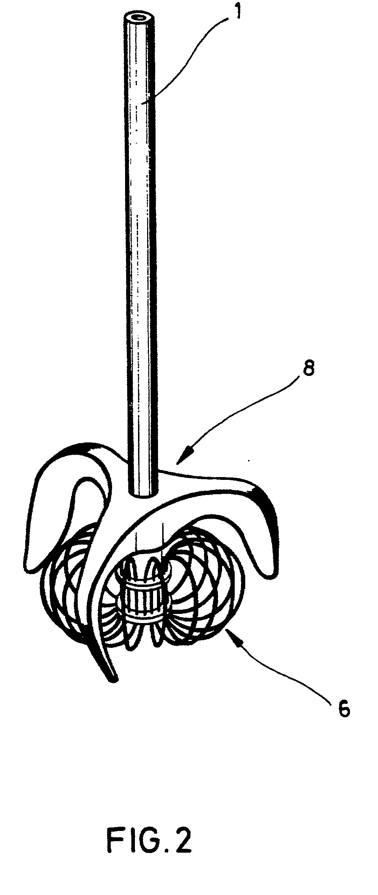

Wie aus den Fig. 1 und 2 ersichtlich, ist über und um die Drahtschraube herum ein Stützkopf 8 angeordnet, der im vorliegenden Falle aus drei Schenkeln besteht, die sich im oberen Abschnitt 9 jeweils radial und im unteren Abschnitt 10 jeweils im wesentlichen axial erstrecken. Die axial verlaufenden Abschnitte 10 weisen jeweils eine etwa schraubenlinienförmig verlaufende Fläche 11 auf, die bei der durch den Pfeil A angedeuteten Drehrichtung des Rührbesens eine gewisse Leitfunktion für das von dem Rührbesen in Bewegung gebrachte Medium übernehmen, die im vorliegenden Falle eine aufwärts parallel zur Achse des Stiels 1 gerichtete Bewegungskomponente in dem Medium hervorruft.

Bei dem in Fig. 1 dargestellten Ausführungsbeispiel des Rührbesens ist der Stützkopf 8 drehfest an einem hohlen Schaft 12 befestigt, der von dem Stiel 1 durchdrungen ist. Innerhalb des Schaftes 12 ist vorzugsweise ein Lager für den Stiel 1 angeordnet. Am oberen Ende trägt der Schaft 12 eine Anschlußeinrichtung 13, mit der er in der schon erwähnten Antriebseinrichtung (nicht dargestellt) drehfest gehalten werden kann.

Die in Fig. 2 dargestelle Ausführungsform unterscheidet sich von der zuvor beschriebenen Ausführungsform dadurch, daß der Stützkopf 8 frei drehbar auf dem Stiel 1 gelagert ist. Es sei jedoch betont, daß geeignete Sicherungseinrichtungen vorgesehen sein müssen, um den Stützkopf 8 in seiner axialen Lage in bezug auf den Stiel 1 zu sichern. Solche Sicherungseinrichtungen können beispielsweise Federringe sein.

Beiden Ausführungsformen ist gemeinsam, daß die Schenkel des Stützkopfes 8 große Zwischenräume zwischen sich freilassen, damit das zu rührende Medium möglichst ungehindert mit der Drahtschraube in Berührung treten kann. Weiterhin ist wesentlich, daß die Enden der Schenkel sich in axialer Richtung über die Stirnseite des Rührbesens hinaus erstrecken, damit, wenn der Rührbesen auf einen Gefäßboden aufgesetzt wird, die Drahtschraube mit dem Gefäßboden nicht in Berührung treten kann. Gegen eine seitliche Berührung durch Behälterwände ist die Drahtschraube durch eine entsprechend große seitliche Ausladung der Schenkel gesichert.

Obgleich in den Zeichnungen nicht dargestellt, sei doch betont, daß der Rührbesen auch ohne den Stützkopf betrieben werden kann, was besonders für die Ausführungsform nach Fig. 1 zutrifft, bei der der Stützkopf zusammen mit dem ihn haltenden Schaft 12 vorzugsweise leicht von dem Stiel 1 abgezogen werden kann.

**Patentansprüche**

1. Rührbesen, insbesondere für Haushaltszwecke, bestehend aus einem Stiel (1) und an einem Ende desselben angebrachten Schlagbügeln, die aus einer endlosen, in sich geschlossenen Drahtschraube (6) bestehen, die den Stiel (1) umschließt, **dadurch gekennzeichnet,** daß an dem genannten Stielende zwei parallel im Abstand zueinander angeordnete Scheiben (2, 3) drehfest angebracht sind, die jeweils mit einem konzentrischen Kranz parallel zur Stielachse verlaufender Bohrungen (4, 5) versehen sind, durch die die Schlaufen (7) der Drahtschraube (6) lose geführt sind.

2. Rührbesen nach Anspruch 1, **dadurch gekennzeichnet,** daß die Bohrungen (4) in der einen Scheibe (2) gegenüber den Bohrungen (5) in der anderen Scheibe (3) in Umfangsrichtung der Scheiben (2, 3) versetzt sind.

3. Rührbesen nach Anspruch 1 oder 2, **dadurch gekennzeichnet,** daß die Bohrungskränze (4, 5) einander gleiche Durchmesser haben.

4. Rührbesen nach einem der vorhergehenden Ansprüche, **dadurch gekennzeichnet,** daß die Schlaufen (7) im wesentlichen kreisförmig sind.

5. Rührbesen nach einem der vorhergehenden Ansprüche, **dadurch gekennzeichnet,** daß um die Drahtschraube (6) herum ein Stützkopf (8) angeordnet ist, in welchem der Stiel (1) drehbar gelagert ist, der in axialer Richtung gegenüber dem Stiel (1) festgelegt ist und der sich in axialer Richtung über das Ende der Drahtschraube (6) hinaus erstreckt.

6. Rührbesen nach Anspruch 5, **dadurch gekennzeichnet,** daß der Stützkopf (8) mit einem hohlen, von dem Stiel (1) durchdrungenen Schaft (12) drehfest verbunden ist, der an seinem dem Stützkopf (8) abgewandten Ende mit einer Einrichtung (13) zum Befestigen am Gehäuse einer Antriebseinrichtung versehen ist.

7. Rührbesen nach einem der Ansprüche 5 und 6, **dadurch gekennzeichnet,** daß der Stützkopf (8) mehrere sich jeweils radial und axial erstreckende Schenkel (9, 10) aufweist, die jeweils zwischen sich einen offenen Zwi schenraum ausbilden.

8. Rührbesen nach Anspruch 7, **dadurch gekennzeichnet,** daß die sich axial erstreckenden Abschnitte (10) der Schenkel eine schraubenförmig verlaufende Fläche (11) aufweisen.

## Claims

1. A whisk, more particularly for domestic purposes, comprising a rod or stick or the like (1) and at one end thereof beating members in the form of an endless wire helix (6) closed on itself and extending around the stick or rod or the like (1), characterised in that two discs (2, 3) are disposed on such rod end in parallel and spaced-apart relationship and for co-rotation with the rod and are each formed with a concentric ring of bores (4, 5) parallel to the rod axis, the loops (7) of the helix (6) extending loosely through the bores (4, 5).

2. A whisk according to claim 1, characterised in that the bores (4) in one disc (2) are offset from the bores (5) in the other disc (3) in the peripheral direction of the discs (2, 3).

3. A whisk according to claim 1 or 2, characterised in that the rings of bores (4, 5) are of the same diameter as one another.

4. A whisk according to any of the previous claims, characterised in that the loops (7) are substantially circular.

5. A whisk according to any of the previous claims, characterised in that a bearing head (8) in which the rod (1) is rotatably mounted extends round the helix (6), is located axially relatively to the rod (1) and extends axially beyond the end of the helix (6).

6. A whisk according to claim 5, characterised in that the head (8) is co-rotatably connected to a hollow stem or shank or the like (12) through which the rod (1) extends and which has, at its end remote from the head (8), means (13) for fixing to the casing of drive means.

7. A whisk according to claim 5 or 6, characterised in that the head (8) has a number of radial and axial arms (9, 10), an open space being left between any two such arms.

8. A whisk according to claim 7, characterised in that the axial parts (10) of the arms have a helical surface (11).

## Revendications

1. Batteur, en particulier batteur ménager, composé d'un manche (1) et de fourchettes batteuses disposées à une extrémité dudit manche et constituée d'une hélice métallique (6) sans fin et refermé sur elle-même qui entoure le manche (1), caractérisé en ce qu'à l'extrémité mentionnée du manche sont disposés solidaires en rotation deux disques (2, 3) parallèles et écartés l'un de l'autre qui sont munis d'une couronne concentrique de perforations (4, 5) parallèles à l'axe du manche par lesquelles sont guidées de manière lâche les boucles (7) de l'hélice métallique (6).

2. Batteur selon la revendication 1, caractérisé en ce que les perforations (4) de l'un des disques (2) sont décalées dans la direction circonférentielle des disques (2, 3) par rapport aux perforations (5) de l'autre disque (3).

3. Batteur selon la revendication 1 ou 2, caractérisé en ce que les couronnes de perforations (4, 5) ont le même diamètre.

4. Batteur selon l'une des revendications précédentes, caractérisé en ce que les boucles (7) sont pour l'essentiel circulaires.

5. Batteur selon l'une des revendications précédentes, caractérisé en ce qu'il est disposé autour de l'hélice métallique (6) une tête d'appui (8) dans laquelle le manche (1) est monté mobile en rotation, qui est fixée en direction axiale par rapport au manche (1) et qui s'étend en direction axiale au-delà de l'extrémité de l'hélice métallique (6).

6. Batteur selon la revendication 5, caractérisé en ce que la tête d'appui (8) est reliée de manière solidaire en rotation à une tige (12) creuse pénétrée par le manche (1) qui présente à son extrémité éloignée de la tête d'appui (8) un dispositif (13) de fixation d'un dispositif d'entraînement sur le boîtier.

7. Batteur selon l'une des revendications 5 et 6, caractérisé en ce que la tête d'appui (8) présente plusieurs branches (9, 10) s'étendant radialement et axialement qui forment entre elles un espace libre ouvert.

8. Batteur selon la revendication 7, caractérisé en ce que les parties (10) des branches s'étendant axialement présentent une surface (1) hélicoïdale.

FIG.1

FIG.2